# EUROPEAN PATENT APPLICATION

(11) **EP 1 261 167 A2**
(43) Date of publication of application: **27.11.2002**
(21) Application number: 01115526.4
(22) Date of filing: 27.06.2001
(51) Int. Cl.: H04L 12/24

(54) **Network element management**

(30) Priority: 25.05.2001 US 866504
(71) Applicant: Redfern Broadband Networks Inc., Wilmington, County of Newcastle, Delaware, 19801 (US)
(72) Inventor: Funk, David, Berowra Heights, New South Wales 2082 (AU)
(74) Representative: Schoppe, Fritz, Dipl.-Ing.

(57) **Abstract**

An optical network element comprising a management unit for receiving a management signal, wherein the management unit comprises at least two substantially identical management components, each management component arranged, in use, to independently receive and process the management signal in a manner such that, in use, the processing conducted by one of the components recognises if a management task associated with the received management signal is executed by the other component, whereby double execution of the task is being avoided.

## Description

### Field of the invention

The present invention relates broadly to a network element for an optical network, to a method of managing an optical network element, and to an optical network.

### Background of the invention

There is a continuing demand for providing more and more user facilities in telecommunications equipment such as an optical network. Those facilities primarily relate to the management of the components within the optical network and the distribution and display of information such as alarm reports, audit logs, alarm logs, status reports and control messages.

The management network controls a channel wavelength called the optical supervisory channel (OSC) which may be transmitted over the network via the Internet protocol (IP). This OSC is usually an out-of -band wavelength, i.e. a wavelength outside the telecommunication wavelength band, which will get transmitted through all of the network elements.

At the network elements, a management unit receives signals on the OSC for processing. To provide failure protection in relation to the management unit, it is known to incorporate duplicated management units in the network element, and designating one as the master unit and one as a standby unit. Where the master management unit fails, the standby unit takes over for protection purposes.

However, the implementation of such a master and standby scheme has several problems associated with it, including that, once a failure occurs, the system is inoperative for the time required to detect the failure plus the time it takes for the standby unit to take over.

At least preferred embodiments of the present invention seek to provide an alternative network element management system which can reduce downtime as a result of management unit failure.

### Summary of the invention

In accordance with a first aspect of the present invention there is provided an optical network element comprising a management unit for receiving a management signal, wherein the management unit comprises at least two substantially identical management components, each management component arranged, in use, to independently receive and process the management signal in a manner such that, in use, the processing conducted by one of the components recognises if a management task associated with the received management signal is executed by the other component, whereby double execution of the task is being avoided.

Accordingly, if either one of the components fails, the other can substantially immediately execute the management task, thereby reducing management downtime.

The management task may comprise the distribution of one or more of the group of alarm reports, audit logs, alarm logs, status reports and control messages.

In one embodiment, the network element is arranged in a manner such that, in use, the management signal is received as an e-mail message transmitted using the standard IP protocols.

Alternatively or additionally, the network element may be arranged in a manner such that, in use, the management signal is received as an HTTP server incorporated in the network element and accessible via a conventional web browser.

The network element may comprise a network node or an in-line amplifier.

The network element in a preferred embodiment is arranged in a manner such that, in use, the management signal can be received from different paths along an optical network to which the network element is connected. Advantageously, the network element is arranged in a manner such that, in use, the management signal and a duplicated management signal are received at the management unit from the different paths substantially simultaneously, and the management unit is further arranged, in use, to process only one of the management signal and the duplicate management signal.

Where the optical network is a ring network, the different paths preferably comprise transmission paths along opposite directions of the ring network.

In a preferred embodiment, the management components are each arranged in a manner such that an electronic tag associated with the management signal is stored at a data storage unit of a particular destination object which is the subject of a particular management task, whereby the data storage unit recognises that the particular management signal has been acted upon to avoid duplication of the management task.

The network element may comprise a network node or an in-line amplifier.

The management components may be implemented as seperate hardware units such as seperate PC units or may be implemented as separate application programs sharing at least one hardware component such as a micro processor.

In accordance with a second aspect of the present invention there is provided a method of managing an optical network element, the method comprising the steps of receiving and processing a management signal in parallel in at least two independent processes and in a manner such that one of the parallel processes conducted recognises if a management task associated with the received management signal is executed as a result of the other process, whereby double execution of the task is being avoided.

In accordance with a third aspect of the present invention there is provided an optical network comprising one or more optical network elements as defined in the first aspect of the present invention.

### Brief description of the drawings

Preferred forms of the present invention will now be described, by way of example only, with reference to the accompanying drawings.

Figure 1 is a schematic diagram illustrating an optical network embodying the present invention.

Figure 2 is a schematic diagram illustrating another optical network embodying the present invention.

Figure 3 is an example screen shot illustrative of a management display screen embodying the present invention.

Figure 4 is a schematic diagram illustrating the functional modules of a metro hub embodying the present invention.

Figure 5 is a schematic diagram illustrating a processing scheme embodying the present invention.

Figure 6 is a schematic diagram illustrating the connectivity of a management network embodying the present invention.

### Detailed description of the embodiments

The preferred embodiments described provide an optical network element wherein downtime as a result of failure of a management unit is reduced, if not eliminated, by parallel processing of management signals in at least two substantially identical management units. Each processing unit is arranged in a manner such that it recognises if a management task associated with a received management signal is executed by the other component, whereby double execution of task is being avoided while minimising downtime in the event of a single component failure.

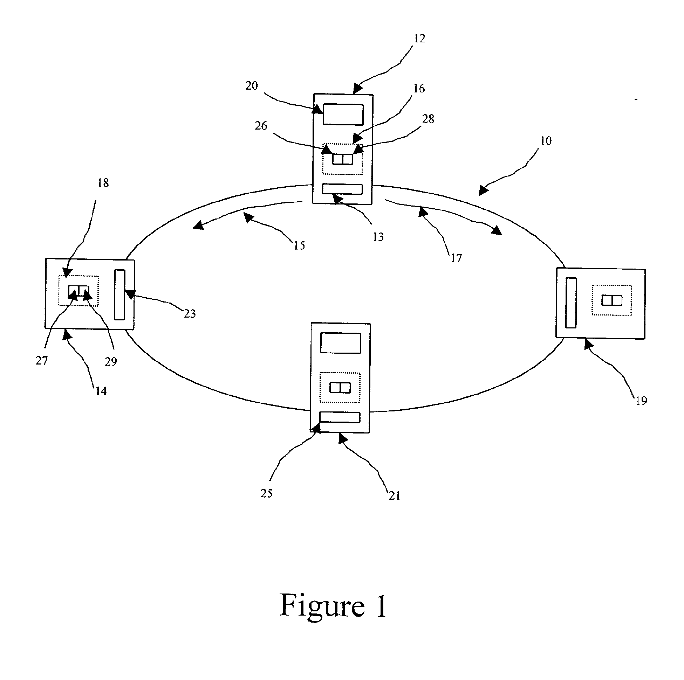

In figure 1, an optical network in the form of a ring network 10 comprises a plurality of network elements, including a network node 12 which interfaces to subscribers of the ring network 10, and an in-line amplifier unit 14.

The network node 12 and amplifier unit 14 each incorporate management units 16, 18 respectively, which are accessible through a desktop PC-type interface 20 incorporated within the network node 12.

A user can monitor and control at least some of the functions and components incorporated in the node 12 and amplifier unit 14 utilising e.g. standard TCP/IP communication protocols. This avoids the need for implementing specialised tools within the ring network 10 for those monitoring and controlling functionalities.

The network management units 16, 18 each comprise two substantially identical management components 26, 28 and 27, 29 respectively. The management components e.g. 26, 28 are each arranged in a manner such that management signals transmitted along the optical network 10 are independently received and processed by both management components 26, 28. Accordingly, should one component fail, the other component can execute a particular management task associated with a management signal substantially immediately, due to the parallel, independent reception and processing of the management signal by both management components 26, 28,

It will be appreciated by a person skilled in the art that during normal operation, i.e. where both management components, e.g. 26, 28 are functioning correctly, a scheme is preferably provided to avoid double execution of management tasks. In the preferred embodiment, the management components, e.g. 26, 28 are each arranged in a manner such that an electronic tag associated with the management signal is stored at a data storage unit of a particular destination object which is the subject of a particular management task, whereby the data storage unit recognises that the particular management signal has been acted upon to avoid duplication of the management task.

The network node 12 further comprises a proxy 13 through which all management traffic is interfaced onto an OSC on the ring network 10. The proxy 13 is arranged in a manner such that IP datagrams, i.e. a management signal destined for e.g. the amplifier unit 14, are duplicated and sent simultaneously around the ring network 10 in opposite directions as indicated by arrows 15 and 17 respectively.

In the preferred embodiment shown in Figure 1, the configuration is such that each management signal sent along the ring network 10 in either direction 15 or 17 is received by both management components e.g. 27, 29 of the management units e.g. 18. Thus, effectively each arrow 15, 17 represents two management signals sent in parallel. It will be appreciated by the person skilled in the art that the present invention may also be implemented with the management signal being transmitted along the ring network only along one direction. In such implementations, the present invention provides protection against failure in the management unit level of each network node. In the preferred embodiment, additional protection against failure in one of the transmission paths of the ring network can be provided, as will be described below.

The OSC is terminated and re-transmitted at each intermediate network element, rather than being amplified through in-line amplifiers. For example, the clock-wise transmitted duplicated OSC signal indicated by arrow 17 will be terminated and re-transmitted at amplifier unit 19 and network node 21 before being received at the amplifier unit 14.

The amplifier unit 14 comprises a proxy 23 arranged in a manner such that one of the duplicated OSC signal's is passed into the amplifier unit 14 for further processing in the management unit 18, whereas the other one is filtered out for disposal. In the example shown in Figure 1, the management signal indicated by arrow 15 will under normal conditions be received at amplifier 14 prior to the other duplicated management signal 17, which would result in management signal 15 being passed into the amplifier unit 14 by the proxy 23 for further processing, whereas management signal 17 will be filtered out for disposal. However, it will be appreciated by a person skilled in the art that rather than determining which signal to pass or filter out only on a "first received" basis, the determination could also and/or additionally be based on a more complex analysis e.g. a "quality of signal"-type determination, which could favour one over the other due to losses or distortions experienced along the respective path.

Importantly, should a fibre cut or other transmission failure occur along either of the paths, the other one will then always be passed into the amplifier unit 14 by the proxy 23 for further processing. Accordingly, the optical network configuration shown in Figure 1 avoids downtime in the management of the ring network 10 where a component failure occurs in one of the management components e.g. 26, 28, and also where a failure along one of the paths 15 or 17 occurs.

In the exemplary embodiment shown in Figure 1, the proxies 13 and 25 of the network nodes 12 and 21 respectively, are configured in a manner such that they can act as both source and destination proxies. In other words, management of the ring network 10 may be conducted from either network node 12 or 21, with the proxy of the other network node then performing a functionality similar to the functionality of proxy 23 of the amplifier unit 14.

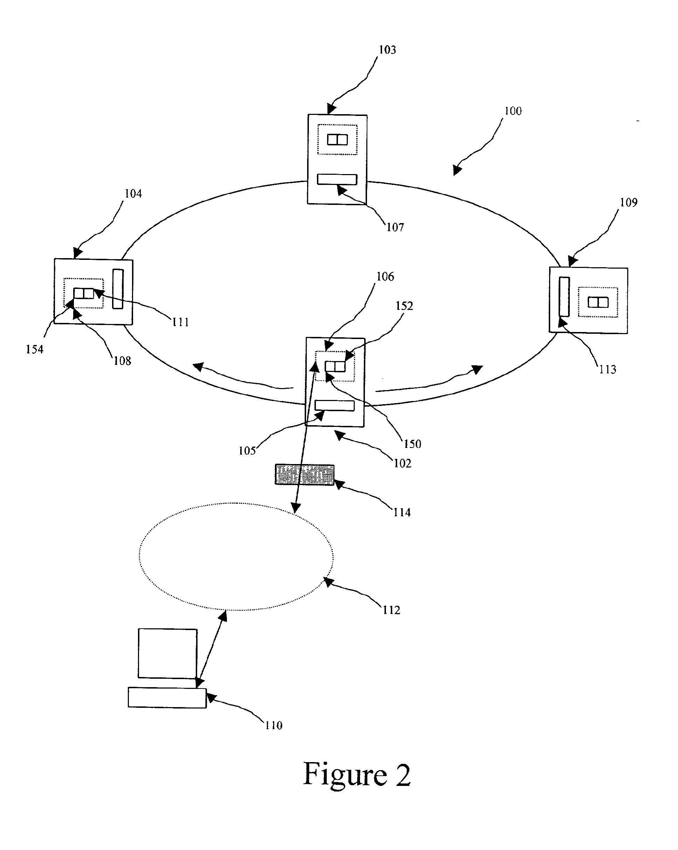

In another embodiment of the present invention shown in Figure 2 a ring network 100 comprises a plurality of network elements, including network nodes, e.g. 102 which interface to subscribers of the ring network 100, and in-line amplifier units e.g. 104.

Each of the network nodes e.g. 102 and amplifier units e.g. 104 incorporates network management units, e.g. 106, 108.

Management of the ring network 100 is implemented by utilising a management channel connecting all of the management units e.g. 106, 108, using TCP/IP protocols for communication.

Each of the management units e.g. 106, 108 comprises two substantially identical management components 150, 152 and 154, 156 respectively of the type described above with reference to Figure 1 (see management components 26, 28 and 27, 29 in Figure 1).

Each of the network nodes 102, 103 incorporates a proxy 105, 107 respectively, of similar functionality to the proxies 13, 25 (Figure 1) described above. Each of the amplifier units 104, 109 incorporates a proxy 111, 113 respectively of similar functionality as the proxy 23 (Figure 1) described above.

In the embodiment shown in Figure 2 a remote management station 110 is provided for centralised management of the ring network 100. Since the management channel of the ring network 100 utilises TCP/IP protocols for communication, the management station 110 can be remotely connected to any one of the network elements of the ring network 100 through the Internet 112. In such an embodiment, suitable firewall protection 114 should be provided at the HTTP server application unit 106 incorporated within the network node 102 to which the management station 110 is connected in the embodiment shown in Figure 2. This ensures that the network is completely isolated from the publicly accessible Internet 112.

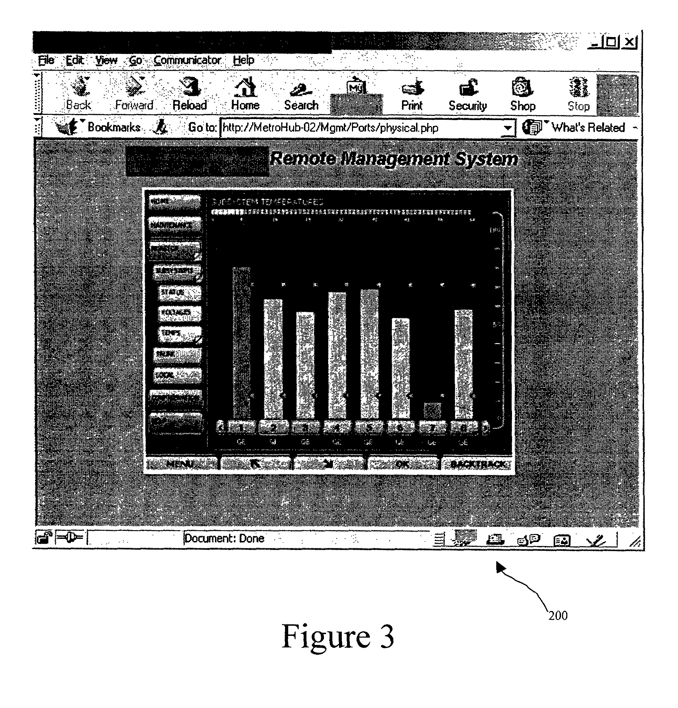

Figure 3 shows an example screen shot 200 illustrative of a management display screen presented to a user at the remote management station 110.

In the described embodiments, the optical ring network comprises a Management Network which overlays the physical and logical topology of the data communication network. The management network enables all Managed Network Elements within the network to be monitored and/or controlled from a Management Terminal.

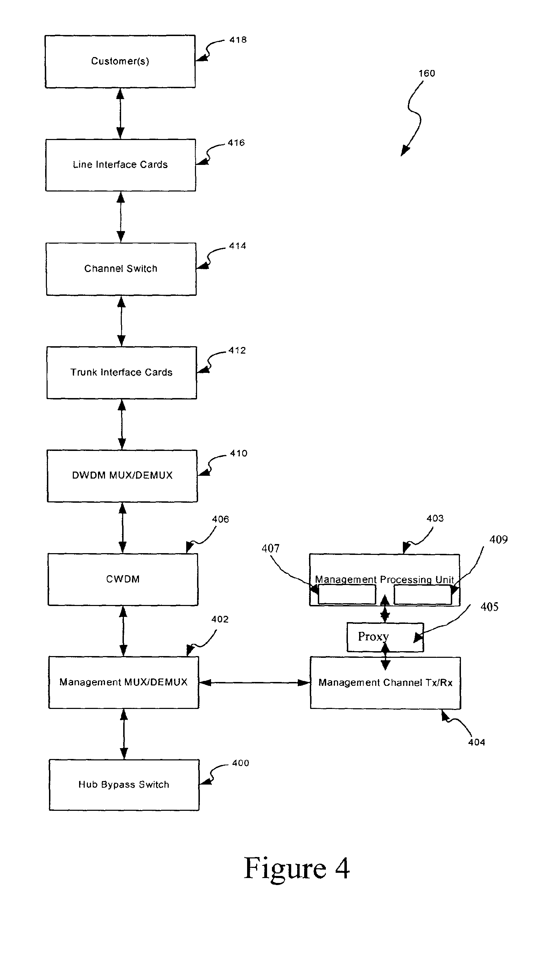

The Managed Network Elements may comprise e.g. a metro hub, a core hub or a line amplifier. Figure 4 shows a block diagram illustrating the various functional modules at e.g. a metro hub 160.

The metro hub comprises the following functional modules:
- a hub bypass switch connecting the metro hub 400 to the optical network (not shown);
- a management MUX/DEMUX unit 402 for extracting the OSC from the network traffic;
- a course wavelength division multiplexing (CWDM) unit 406 for course multiplexing/demultiplexing of optical data signals;
- a dense wavelength division multiplexing (DWDM) MUX/DEMUX unit 410 for dense multiplexing/demultiplexing of the data signals;
- a system of trunk interface cards 412, channel switch 414 and line interface cards 416 interfacing to customers (subscribers) 418 of the optical network;
- a management channel Tx/Rx unit 404 interfacing to a management processing unit 403 comprising two substantially identical management components 407, 409 of the type of components 26, 28, 27, 29 (Figure 1) and, 150, 152, 154, 156 (Figure 2); and
- a proxy 405 of the type of proxies 13, 23 (Figure 1) and 105, 107 (Figure 2) described above incorporated within the management processing unit 403.

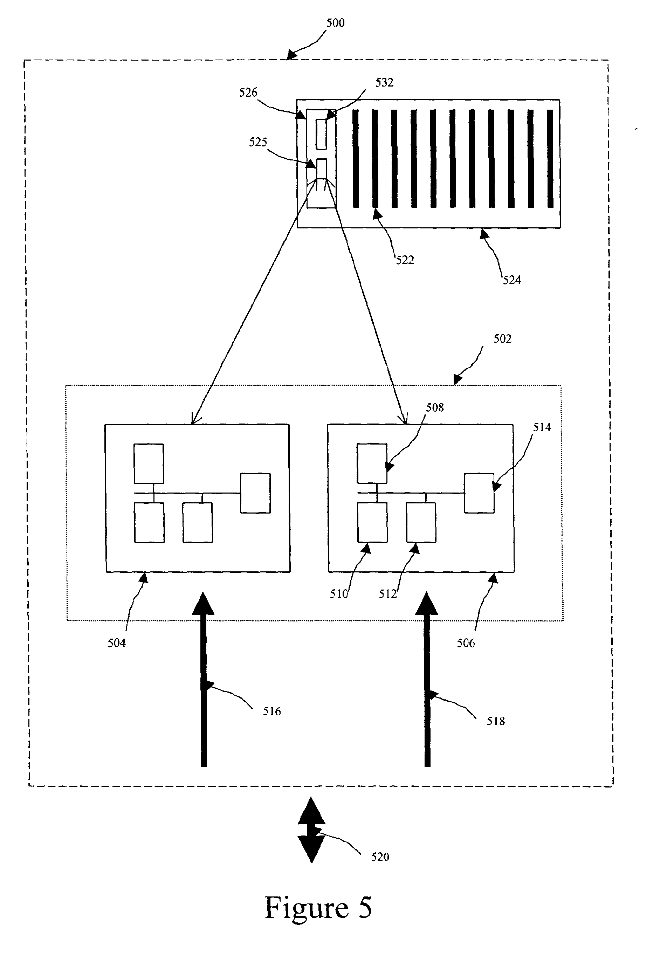

Turning now to Figure 5, an example parallel reception and processing procedure embodying the present invention will be described.

In Figure 5, only elements required for the description of the parallel reception and processing scheme embodying the present invention incorporated in a network node 500 are shown for clarity, It will be appreciated that the network node 500 does incorporate other components, similar to the metro hub 400 shown in Figure 4.

The network hub 500 comprises a management processing unit 502 incorporating two substantially identical management components 504, 506. Each of the management components, e.g. 506 comprises a microprocessor 508, a flash memory 510 for storing a current application program, and a read only memory (ROM) 512 for storing other management application programs, as well as an input/output interface 514.

As indicated by arrows 516, 518, an incoming management signal from a trunk connection 520 to an optical network is received in parallel by both management components 504 and 506. Both management components 504 and 506 will process the received management signal and initiate execution of a management task associated with the management signal. In the example shown in Figure 5, the management task is to check the status of a plurality of interface cards e.g. 522 inserted in an interface subrack 524 of the network element 500. To execute this management task, both management components 504 and 506 will attempt to contact a communication controller card (CCC) 526 inserted in the interface subrack 524. The communication attempts will be cued for processing in a cueing unit 525 of the CCC 526.

In a first scenario where both management components 504 and 506 are operative, e.g. the management component 504 will be the first to establish a communication link with the CCC 526, and will immediately store an electronic tag associated with the received management signal RAM unit 532 incorporated in the CCC 526. When subsequently the communication link is established between the management component 506 and the CCC 526, the electronic flag in the flash memory 532 will be recognised, and as a result processing of the management task by the management component 506 will be terminated in the example embodiment.

However, should the management component 504 fail, no flag will be present in the flash memory 532 of the CCC 526 when the communication link is established between the CCC 526 and the other management component 506. As a result, the management task will now be executed by the management component 506.

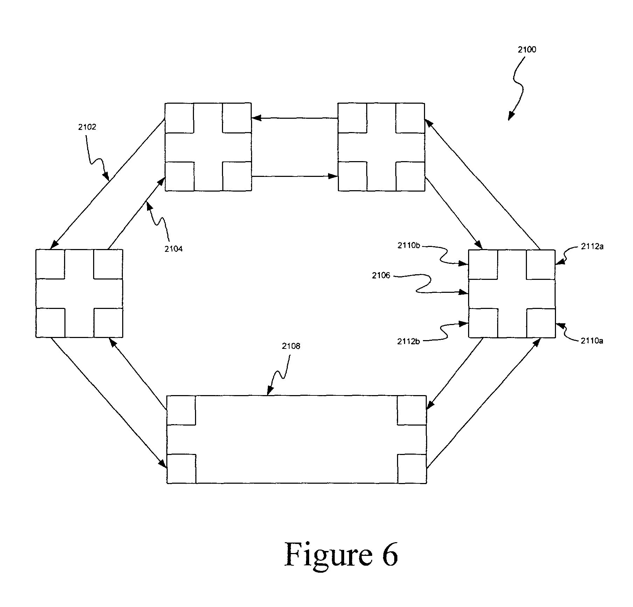

The logical connectivity of the Management Network 2100 is shown in Figure 6. The Management Network 2100 comprises two logical channels (importantly not necessarily on two physical optical connections) counter-propagating within the network. The use of two counter-propagating channels ensures that communication of management information between any pair of network elements is not interrupted in the case of any single failure such as e.g. a fibre break. Each counter-propagating channel consists of a set of point-to-point links, e.g. 2102, 2104, connecting adjacent Managed Network Elements, e.g. 2106. Thus each Managed Network Element 2106 comprises two management receivers 2110*a*, 2110*b* and two management transmitters 2112*a*, 2112*b*. Some terminal equipment, e.g. a Core Hub 2108, may contain multiple Managed Network Elements, in which case the connectivity between these elements is effected internally, and the terminal equipment still has only two sets of management transmitters and receivers.

Within each Managed Network Element, the management signals are multiplexed and demultiplexed with the data signals on each fibre by the Management MUX/DEMUX Units 402 (see Figure 4).

Advantageously, since the management channel connections e.g. 2102, 2104, are established between adjacent Managed Network Elements, they are fully regenerated at each Managed Network Element, and do not require optical amplification.

The management channel connections may comprise signals transmitted outside the gain bandwidth of conventional optical amplifiers, e.g. at a wavelength of around 1510 nm.

Advantageously, the two counter-propagating management signals 2102, 2104 in each link may be transmitted bi-directionally in the same fibre.

In order to avoid problems with backscattered or reflected light from one management signal, e.g. 2102, interfering with the counter-propagating management signal, e.g. 2104, the two management channels may be transmitted on different wavelengths, e.g. 1505 nm and 1515 nm.

The management channel may comprise relatively low bit-rate signals, e.g. around 100 Mb/s, so that dispersion and power budget for the management signals do not restrict the maximum distance between Managed Network Elements.

The transmission format of the management signals may comprise local-area network standards, e.g. full-duplex 100 Mb/s Fast Ethernet, so that the management channel connections may be implemented using low-cost commodity hardware.

Advantageously, the Management multiplexer/de-multiplexer (MUX/DEMUX) Units 402 (see Figure 4) should present minimal insertion loss to non-management channels, in order to maximise the power budget available for data signal transmission.

It will be appreciated by a person skilled in the art that numerous variations and/or modifications may be made to the present invention as shown in the specific embodiments without departing from the spirit or scope of the invention as broadly described. The present embodiments are, therefore, to be considered in all respects to be illustrative and not restrictive.

In the claims that follow and in the summary of the invention, except where the context requires otherwise due to express language or necessary implication, the word "comprising" is used in the sense of "including", i.e. the feature specified may be associated with further features in various embodiments of the invention.

## Claims

1. An optical network element comprising:
- a management unit for receiving a management signal, wherein the management unit comprises at least two substantially identical management components,
- each management component arranged, in use, to independently receive and process the management signal in a manner such that, in use, the processing conducted by one of the components recognises if a management task associated with the received management signal is executed by the other component, whereby double execution of the task is being avoided.

2. A network element as claimed in claim 1, wherein the management task comprises the distribution of one or more of the group of alarm reports, audit logs, alarm logs, status reports and control messages.

3. A network element as claimed in claim 1, wherein the network element is arranged in a manner such that, in use, the management signal is received as an e-mail message transmitted using the standard IP protocols.

4. A network element as claimed in claim 1, wherein the network element is arranged in a manner such that, in use, the management signal is received as an HTTP server incorporated in the network element and accessible via a conventional web browser.

5. A network element as claimed in claim 1, wherein the network element comprises a network node or an in-line amplifier.

6. A network element as claimed in claim 1, wherein is arranged in a manner such that, in use, the management signal can be received from different paths along an optical network to which the network element is connected.

7. A network element as claimed in claim 6, wherein the network element is arranged in a manner such that, in use, the management signal and a duplicated management signal are received at the management unit from the different paths substantially simultaneously, and the management unit is further arranged, in use, to process only one of the management signal and the duplicate management signal.

8. A network element as claimed in claims 6 or 7, wherein ,where the optical network is a ring network, the different paths comprise transmission paths along opposite directions of the ring network.

9. A network element as claimed in claim 1, wherein the management components are each arranged in a manner such that an electronic tag associated with the management signal is stored at a data storage unit of a particular destination object which is the subject of a particular management task, whereby the data storage unit recognises that the particular management signal has been acted upon to avoid duplication of the management task.

10. A method of managing an optical network element, the method comprising the steps of:
- receiving and processing a management signal in parallel in at least two independent processes and in a manner such that one of the parallel processes conducted recognises if a management task associated with the received management signal is executed as a result of the other process, whereby double execution of the task is being avoided.

11. An optical network comprising one or more optical network elements as defined in any one of claims 1 to 19.
